**Europäisches Patentamt**

**European Patent Office**

**Office européen des brevets**

(19)

(11) Veröffentlichungsnummer: **0 022 126**
**B1**

(12) # EUROPÄISCHE PATENTSCHRIFT

(45) Veröffentlichungstag der Patentschrift :
**13.06.84**

(21) Anmeldenummer : **80890066.6**

(22) Anmeldetag : **06.06.80**

(51) Int. Cl.³ : **F 24 D 11/00, F 24 J 3/00**

(54) **Heiz- bzw. Klimatisierungsanlage mit Wärmespeichern.**

(30) Priorität : **06.06.79 AT 4059/79**

(43) Veröffentlichungstag der Anmeldung :
**07.01.81 Patentblatt 81/01**

(45) Bekanntmachung des Hinweises auf die Patenterteilung : **13.06.84 Patentblatt 84/24**

(84) Benannte Vertragsstaaten :
**BE CH DE FR GB IT LI LU NL SE**

(56) Entgegenhaltungen :
**DE-A- 2 803 625**
**FR-A- 2 415 779**
**SOLARAGE, Band 4, Nr. 1, Januar 1979, HARRISVILLE (US) S. MORRIS: "Natural Convection: No Moving Parts:", Seiten 38-41**

(73) Patentinhaber : **Franz Haas Unternehmens-Beteili-gungs-Ges.m.b.H.**
**Gerstlgasse 25**
**A-1210 Wien (AT)**

(72) Erfinder : **Baumann, Ernst**
**Schönlaterngasse 11**
**A-1010 Wien (AT)**

(74) Vertreter : **Berger, Erhard, Dr.**
**Siebensterngasse 39 Postfach 306**
**A-1071 Wien (AT)**

**Beschreibung**

Die Erfindung betrifft eine Heiz- bzw. Klimatisierungsanlage mit Wärmespeichern für ein mehrgeschossiges Gebäude, welches an wenigstens einer Front über wenigstens einen Teil der Gebäudehöhe von oben nach unten gehende Ausnehumungen aufweist. Effektive Wärmespeicher müssen in der Regel ein relativ grosses Volumen besitzen.

Aus diesem Grund wurden sie bisher vor allem in Kellern oder Dachböden von mehrgeschossigen Gebäuden situiert, was meistens mit einem erheblichen Leitungsaufwand verbunden war.

In bekannter Weise in Fassaden integrierte Wärmespeicher können nur ein kleines Volumen aufweisen, damit die Belichtung der Häuser nicht beeinträchtigt wird.

Aus der Literatur sind Wärmeabsorptions- und -speichereinrichtungen bekannt, die insbesondere aufgrund ihrer ungünstigen Anordnung bei zu beheizenden Gebäuden wenig effizient sind. Gemäss der Literaturstelle « SOLARAGE, Band 4, Nr. 1, Januar 1979, HARRISVILLE (US), S. MORRIS : Natural Convection : No Moving Parts !, Seiten 38-41 » sind beispielsweise Sonnenkollektoren mit Wärmespeichern verbunden, die zur Beheizung von Innenräumen dienen.

Die in dieser Veröffentlichung vorgestellte Situierung und Ausbildung solcher Solareinrichtungen bei mehrgeschossigen Häusern ist jedoch funktionell und wirtschaftlich kaum vertretbar.

Da sich die betreffenden Wärmespeicher im Bereich der Fussböden bzw. Decken von Innenräumen befinden, kann man die Wärmespeicherung und Wärmeabgabe nur schwer regulieren.

Auch muss man ein relativ langes Leitungssystem und/oder grossflächige Hohlräume im Gebäudeinnern in Kauf nehmen. Dadurch verteuert sich nicht nur das Solarsystem, sondern unter Umständen auch das Gebäude, dessen Kubatur gegebenenfalls entsprechend vergrössert werden muss.

Aus der « DE-A-2 803 625 (E.C. CASES LTD.), Seite 5, letzter Absatz bis Seite 6, erster Absatz ; Figuren 1 und 2 » ist eine besondere Ausführung einer Balkonverglasung bekannt geworden.
Mittels solcherart gebildeter verglaster Balkone kann in an sich bakannter Weise Sonnenwärme absorbiert werden. Es ist jedoch nicht angegeben, wie die absorbierte Wärme gespeichert werden kann.

Schliesslich geht aus der « FR-A-2 415 779 (MENEROUD) » ein Solarkollektor als bekannt hervor, dessen Absorberfläche im wesentlichen durch die Oberfläche eines Wärmespeichers gebilbet ist, der von Kanälen zur Leitung von Wärmetransportmedien durchzogen ist.

Die hier vorgeschlagenen Ausführungsformen von Absorber- Speicher-Einheiten haben den Nachteil, dass es schwierig ist, die im Wärmespeicher gespeicherte Wärme zu halten und sie bei Bedarf einer gezielten Nutzung zuzuführen.

Es müssen vor allem auch grosse Wärmeverluste nach aussen in Kauf genommen werden.

Erfindungsgemäss werden diese Nachteile dadurch vermieden, dass im Bereich der in einer erstem senkrechten Reihe vorgescheren von oben nach unten gehenden Gebäudeausnehmungen Wärmespeicher in Intervallen von zwei Geschossen übereinander, im wesentlichen unter Loggienböden angeordnet sind, wobei die Wärmespeicher in den Gebäudeausnehmungen einer angrenzenden, senkrechten, der ersten benachbarten Reihe um eine Geschosshöhe gegeneinander versetzt sind. Dadurch bleibt zwischen den übereinanderbefindlichen Wärmespeichern genügend Platz für einen ausreichenden Lichteinfall in die Räume des Gebäudes.

Eine weitere vorteilhafte Ausbildung der Erfindung ist im Anspruch 2 angegeben.

Sind die Wärmespeicher mit im Bereich der Fassade angeordneten Sonnenkollektoren oder Sonnenabsorbern gekoppelt, können die Wärmespeicher ohne bzw. mit geringem Leitungsaufwand und mit geringen Wärmeverlusten mit Sonnenenergie aufgeladen werden. Dazu kann es zweckmässig sein, eine Ausbildung gemäss Anspruch 3 zu schaffen.

Die Verbindung der Wärmespeicher mit Sonnenkollektoren oder Sonnenabsorbern durch Kanäle ermöglicht eine weitgehend von der Form und Lage der Wärmespeicher unabhängige Orientierung der Absorptionsflächen der Sonnenkollektoren bzw. Sonnenabsorber. Die Ausbildung der Erfindung nach Anspruch 4 ist besonders wirtschaftlich.

Die zwischen den Wärmespeichern befindlichen, mittels licht- durchlässiger bzw. durchsichtiger Wände oder Folien nach aussen hin abgeschlossenen bzw. abschliessbaren Loggien wirken zusammen mit den Wärmespeichern sowohl als Wärmeabsorptions- und -speichereinrichtung als auch als klimatisierte Pufferzone zur Verminderung der Wärmestrahlungsverluste bei den dahinterliegenden Innenräumen des Gebäudes. An Hand der Zeichnungen sind zeitere Merkmale des Erfindung beschrieben.

Figur 1 zeigt im Grundriss einen Teil eines Gebäudes, das im Bereich der Fassade Ausnehmungen mit Dreiecksquerschnitt aufweist, in denen sich die Wärmespeicher befinden.

Figur 2 zeigt das gleiche Gebäude im Lotschnitt II.

Figur 3 zeigt das gleiche Gebäude im Lotschnitt III.

Figur 4 zeigt im Grundriss einen Teil eines Gebäudes, dessen Fassade Ausnehmungen mit Dreiecksquerschnitt aufweist, in denen sich die Wärmespeicher teilweise befinden ; teilweise befinden sich diese Wärmespeicher ausserhalb der Gebäudeausnehmungen.

Figur 5 zeigt im Lotschnitt ein Gebäude mit erfindungsgemäss angeordneten Wärmespeichern.

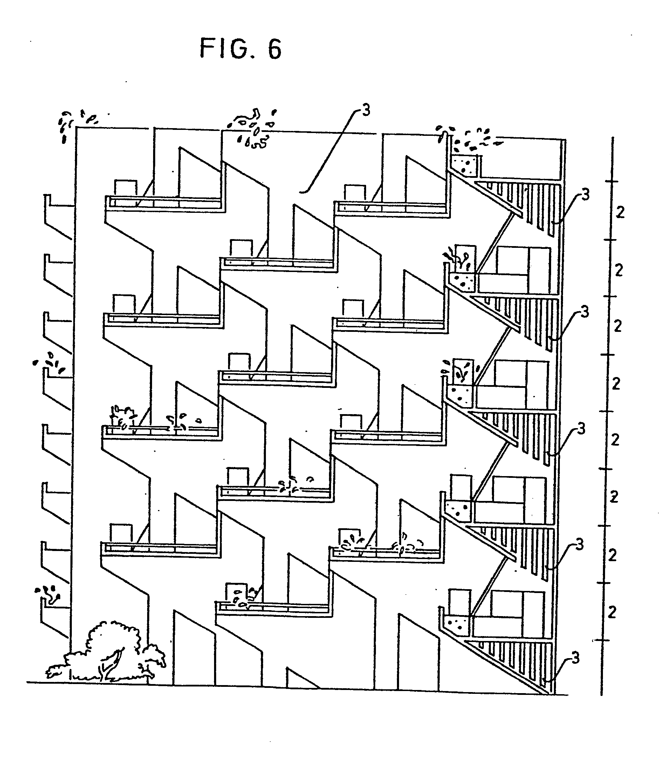

Figur 6 zeigt in der Seitenansicht bzw. im Lotschnitt ein Gebäude mit erfindungsgemäss angeordneten Wärmespeichern.

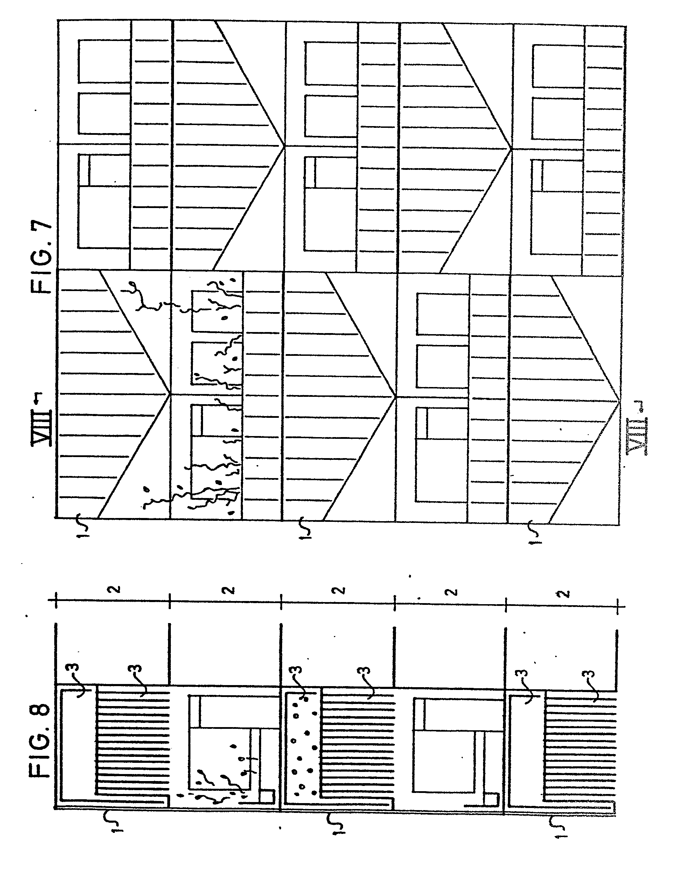

Figur 7 zeigt in der Vorderansicht einen Teil eines Gebäudes mit erfindungsgemäss angeordneten Wärmespeichern.

Figur 8 zeigt im Lotschnitt VIII-VIII einen Teil des gleichen Gebäudes mit erfindungsgemäss angeordneten Wärmespeichern.

Gemäss den dargestellten Figuren sind mit 1 Sonnenkollektoren oder Sonnenabsorber bezeichnet. Mit 2 ist die Geschosshöhe des Gebäudes bezeichnet, bei dem Wärmespeicher 3 erfindungsgemäss angeordnet sind.

Der Wärmespeicher 3 kann beispielsweise ein sensibler oder latenter Speicher sein.

Als Material für sensible Speicher kommen unter anderem Beton, Stein, Keramik oder Flüssigkeiten wie Wasser oder Öl in Betracht. Als Latentspeicherstoffe kann man in an sich bekannter Weise beispielsweise Paraffine und Salze vorteilhaft verwenden. Gegebenenfalls sind die Wärmespeicher 3 mit im wesentlichen vor den Loggien des Gebäudes befindlichen Sonnenkollektoren 1 oder Sonnenabsorbern gekoppelt.

Die Wärmespeicher 3 können beispielsweise auch mit Wärmepumpen gekoppelt sein.

Die Wärmespeicher 3 befinden sich wenigstens teilweise unter Loggienböden.

Un eine gute Belichtung der Räume des Gebäudes zu gewährleisten, sollen die im wesentlichen unter Loggienböden angeordneten Wärmespeicher 3 in benachbarten von oben nach unten gehenden Gebäudeausnehmungen um eine Geschosshöhe 2 gegeneinander versetzt sein.

Die Loggienböden über den Wärmespeichern 3 können feststehende Platten, Gitter oder Roste sein. Die Loggienböden können aber auch teilweise oder ganz abhebbar angeordnet sein. Dadurch ist es möglich, von oben zu den Wärmespeichern 3 zu gelangen.

Das ist beispielsweise von Vorteil, wenn der Wärmespeicher 3 im wesentlichen aus einer Latentspeichermasse besteht, die sich in einem oder mehreren Behältern befindet.

Auch bei anderen Speicherstoffen, die sich in einem oder mehreren Behältern befinden, können abhebbare Deckel von Vorteil sein. Beispielsweise bei flüssigen oder lose gelagerten Speicherstoffen.

Zum Austausch bzw. zum Transport von Wärme ist die Wärmespeichermasse vorzugsweise von Kanälen, Rohren oder Durchbrechungen durchzogen. Die Speichermasse kann mittels Kanälen oder Rohren mit Sonnenkollektoren 1 oder Sonnenabsorber gekoppelt sein.

Besteht die Speichermasse aus festen Stoffen, sind diese vorzugsweise in Form von Rippen, Lamellen, Stäben oder Scheiben ausgebildet.

Als Wärmespeichermasse kommen beispielsweise auch Metalle und diverse Mineralien in Betracht.

Die Wärmespeichermasse soll nach aussen hin gut wärmedämmend isoliert sein.

Gegebenenfalls sind von den Wärmespeichern 3 Kanäle wu Räumen des Gebäudes geführt.

Diese Kanäle können beispielsweise für das Durchströmen von Luft ausgebildet sein. Sie können aber auch für das Durchströmen von Flüssigkeit wie Wasser oder Öl ausgebildet sein.

Auf diese Weise können Räume des Gebäudes beheizt werden. Es kann beispielsweise eine Fussbodenheizung mit Wärme aus Wärmespeichern 3 versorgt werden.

Die Wärmespeicher 3 können mittels Kanälen, Rohren oder diversen Durchbrechungen mit Sonnenkollektoren oder Sonnenabsorbern gekoppelt sein.

Behälter, in denen sich Wärmespeichermasse befindet, können an ihrer Rückseite die Grundrissform der von oben nach unten gehenden Gebäudeausnehmungen aufweisen. Diese Behälter können selbstverständlich auch eine andere Form aufweisen. Sie können beispielsweise im wesentlichen zylindrisch sein.

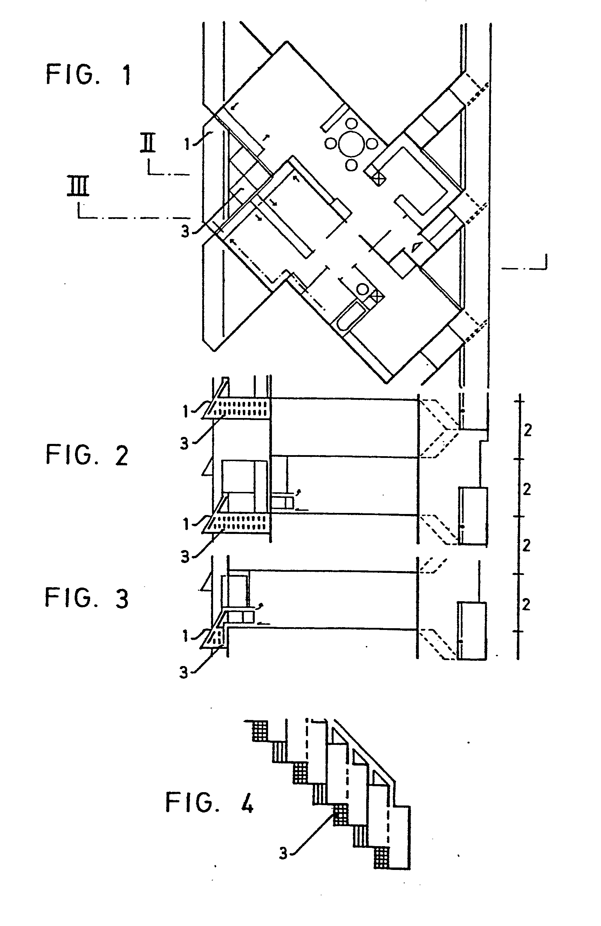

Wie Fig. 4 zeigt, können die Wärmespeicher 3 auch über die im wesentlichen von oben nach unten verlaufenden Gebäudeausnehmungen hinausragend angeordnet sein.

Die Wärmespeicher 3 können im wesentlichen aus Fertigteilen, beispielsweise aus Betonfertigteilen bestehen.

Zwischen den in Intervallen von zwei Geschossen übereinander angeordneten Wärmespeichern 3 sind Räume, insbesondere Loggienräume gebildet.

Der zwischen den übereinanderbefindlichen Wärmespeichern 3 gebildete Loggienraum kann mittels wenigstens einer zumindest teilweise lichtdurchlässigen bzw. durchsichtigen Wand oder Folie abschliessbar bzw. abgeschlossen sein.

Durch so eine Loggienverglasung kann viel Sonnenwärme aufgefangen und im Loggienraum gespeichert werden.

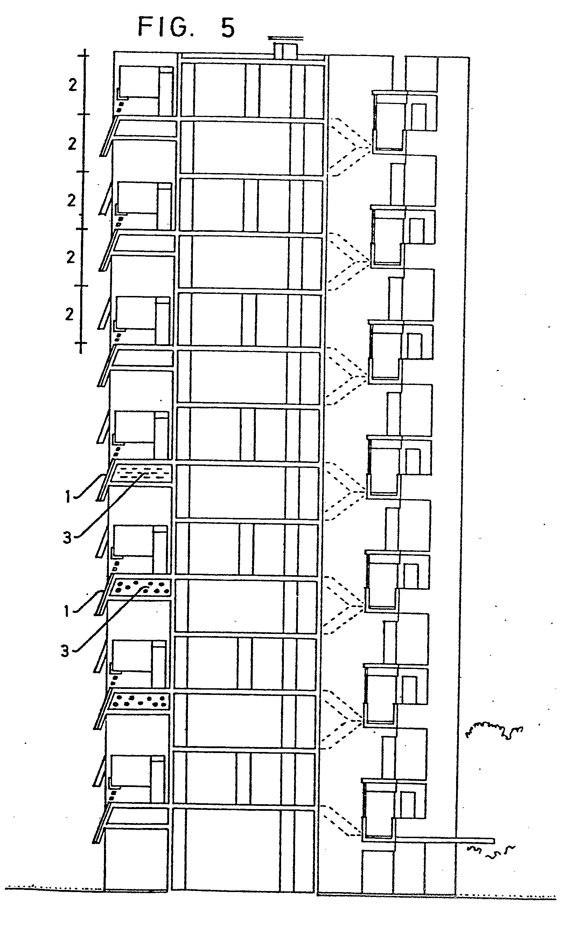

Wie Fig. 5 zeigt, können sich sowohl Wärmespeicher 3 als auch Sonnenkollektoren 1 oder Sonnenabsorber in Höhenlagen unter den Loggienböden befinden. Das erlaubt gegebenenfalls einen Wärmetransport durch die Schwerkraft, also gegebenenfalls ohne Pumpen oder Ventilatoren.

Wie die Figuren 1-3 zeigen, können die Sonnenkollektoren 1 oder Sonnenabsorber nach oben hin über die Wärmespeicher 3 hinausragen. In diese, Fall kann es vorteilhaft sein, wenn zum Wärmetransport mittels eines Mediums Pumpen oder Ventilatoren vorgesehen sind.

Selbstverständlich ist die Erfindung nicht auf die in den Zeichnungen dargestellten Ausführungsbeispiele beschränkt. Es können beispielsweise mehrere Wärmespeicher 3 durch Kanäle oder Rohre miteinander gekoppelt sein.

Wärmespeicher 3 können diverse, in den Zeichnungen nicht dargestellte Formen aufweisen.

Sonnenkollektoren oder Sonnenabsorber können sich im wesentlichen direkt vor den mit ihnen gekoppelten Wärmespeichern 3 befinden.

Dadurch ist ein Wärmetausch ohne grossen Installationsaufwand möglich.

Unter den Wärmespeichern 3 können sich Schutzplatten befinden, die gegebenenfalls die Wärmespeicher 3 tragen.

Der konstruktive Aufbau könnte so sein, dass auf einer Platte ein Behälter steht, in dem sich Wärmespeichermasse befindet. Der Behälter ist mit einer begehbaren Decke versehen, die im wesentlichen den Loggienboden bildet.

Es kann aber auch ein Wärmespeichermasse beinhaltender Behälter mit den Wänden des Gebäudes verbunden sein bzw. auf Stützorganen aufgelagert sein.

Der Wärmespeicher 3 kann im wesentlichen den Boden einer Loggia bzw. Terrasse bilden.

Die Ausnehmungen des Gebäudekörpers, in deren Bereich die Wärmespeicher 3 angeordnet sind, können über die ganze Gebaüdehöhe gehen. Sie können aber auch über einen Teil der Gebäudehöhe gehen.

Die Gebäudeausnehmungen können senkrecht von oben nach unten geführt sein. Sie können aber auch nach unten hin stufenweise vorspringend, gegebenenfalls rückspringend verlaufen.

Die im wesentlichen von oben nach unten gehenden Gebäudeausnehmungen können auch abwechselnd vor- und zurückspringend verlaufen.

Die Wärmespeicher 3 sind vorzugsweise begehbar ausgebildet. Die in der gleichen von oben nach unten gehenden Gebäudeausnehmung angeordneten Wärmespeicher 3 können senkrecht übereinander liegen.

Sie können aber auch von der Senkrechten abweichend in übereinanderliegenden Höhenlagen beispielsweise vor- und/oder zurückspringend angeordnet sein.

Selbstverständlich können ausser den erfindungsgemäss angeordneten Wärmespeichern 3 zusätzliche Wärmespeicher angeordnet sein.

Die erfindungsgemässe Anordnung der Wärmespeicher 3 ist im wesentlichen unabhängig von der Funktion des Gebäudes. Gemäss den dargestellten Figuren sind die Wärmespeicher 3 bei Wohnhäusern angeordnet.

Sind die Wärmespeicher 3 mit Sonnenkollektoren 1 oder Sonnenabsorbern gekoppelt, ist es vorteilhaft, wenn die Wärmespeicher 3 an einer der Sonne wugewandten Fassade des Gebäudes angeordnet sind. Dadurch können die Wärmespeicher 3 mit geringem Installationsaufzand an Sonnenkollektoren 1 oder Sonnenabsorber angeschlossen werden.

Selbstverständlich können Wärmespeicher 3 auch an mehreren Fassaden eines Gebäudes angeordnet sein.

Die Anordnung der Wärmespeicher 3 im Bereich der Fassade eines mehrgeschossigen Hauses hat im gegenständlichen Fall den Vorteil, dass sich die Wärmespeicher 3 in unmittelbarer Nähe des Energieverbrauches befinden.

Sind zusätzlich Einrichtungen zur Absorption von Sonnenenergie oder Umgebungswärme im Bereich der Fassade vorgesehen, liegen Energiegezinnung, -speicherung und -verbrauch nahe beisammen.

Dadurch können Leitungsaufwand und durch Leitung bedingte Energieverluste klein gehalten bzw. vermieden werden.

Bei Einrichtungen zur Absorption von Sonnenenergie in Form von verglasten Loggien, in denen bzw. zwischen denen sich die Wärmespeicher 3 befinden, sind gegebenenfalls überhaupt keine Leitungen notwendig.

Solche verglaste Loggien wirken vor allem als klimatisierte Pufferzone.

Sie können selbstverständlich in an sich bekannter Weise Schiebe-, Schwing-, Kipp-, Klapp- oder Drehflügelfenster aufweisen, die im Sommer geöffnet werden, sodass die Loggien im wesentlichen auch als Freiräume benutzbar sind.

## Ansprüche

1. Heiz- bzw. Klimatisierungsanlage mit Wärmespeichern für ein mehrgeschossiges Gebäude, welches an wenigstens einer Front über wenigstens einen Teil der Gebäudehöhe von oben nach unten gehende Ausnehmungen aufweist, dadurch gekennweichnet, dass im Bereich der in einer ersten Folge vorgesehenen von oben nach unten gehenden Gebäudeausnehmungen Wärmespeicher (3) in Intervallen von zwei Geschossen übereinander, im wesentlichen unter Loggienböden angeordnet sind, wobei die Wärmespeicher (3) in den Gebäudeausnehmungen einer der ersten Folge benachbarten Folge um eine Geschosshöhe (2) gegeneinander versetzt sind.

2. Heiz- bzw. Klimatisierungsanlage nach Anspruch 1, dadurch gekennzeichnet, dass die Wärmespeicher (3) mit Sonnenkollektoren (1) oder Sonnenabsorbern gekoppelt sind.

3. Heiz- bzw. Klimatisierungsanlage nach Anspruch 1 und/oder 2, dadurch gekennzeichnet, dass die Wärmespeicher (3) mit im wesentlichen vor Loggien befindlichen Sonnenkollektoren (1) oder Sonnenabsorbern durch Kanäle oder Rohre verbunden sind.

4. Heiz- bzw. Klimatisierungsanlage nach einem der Ansprüche 1-3, dadurch gekennzeichnet, dass der zwischen den Wärmespeichern (3) befindliche Loggienraum mittels wenigstens einer zumindest teilweise lichtdurchlässigen bzw. durchsichtigen Wand bzw. Folie abschliessbar bzw. abgeschlossen ist.

## Claims

1. Heating or air conditioning installation comprising heat accumulators for a multistory building recesses running downwards from above at least over one front side over at least part of the height of the building, characterized in that, within the area of the building recesses running downwards from above in a first sequence, there are heat accumulators (3) arranged in superposition, substantially under floors of loggias, at intervals of two stories, the heat accumulators (3) in the building recesses of a sequence adjacent to the first sequence being offset with respect to each other by the height of one story.

2. Heating or air conditioning installation according to claim 1, characterized in that the heat accumulators (3) are coupled with solar collectors (1) or solar absorbers.

3. Heating or air conditioning installation according to claim 1 and/or 2, characterized in that the heat accumulators (3) are connected with solar collectors (1) or solar absorbers located substantially in front of loggias by means of channels or tubes.

4. Heating or air conditioning installation according to one of claims 1-3, characterized in that the loggia space between the heat accumulators (3) is closable or closed by means of at least one at least partially light-transmissive or transparent wall or foil.

## Revendications

1. Installation de chauffage ou de climatisation avec accumulateurs thermiques pour un immeuble à plusieurs étages, qui présente au moins sur une façade, et au moins sur une partie de la hauteur de l'immeuble, des renfoncements s'étendant du haut vers le bas, caractérisée en ce que dans la zone des renfoncements d'immeuble s'étendant du haut vers le bas selon une première suite, des accumulateurs thermiques (3) sont disposés, l'un au-dessus de l'autre à intervalles de deux étages, en particulier sous des sols de loggias, de sorte que les accumulateurs thermiques (3) sont mutuellement décalés d'une hauteur d'étage (2) dans les renfoncements d'immeuble, d'une suite voisine de la première suite.

2. Installation de chauffage ou de climatisation selon la revendication 1, caractérisée en ce que les accumulateurs thermiques (3) sont couplés avec des collecteurs ou absorbeurs solaires (1).

3. Installation de chauffage ou de climatisation selon la revendication 1 et/ou 2, caractérisée en ce que les accumulateurs thermiques (3) sont reliés par des conduits ou des tubes avec des collecteurs ou absorbeurs solaires (1) se trouvant en particulier devant les loggias.

4. Installation de chauffage ou de climatisation selon l'une des revendications 1 à 3, caractérisée en ce que l'espace de loggia, se trouvant entre les accumulateurs thermiques (3), est séparable ou fermé au moyen d'au moins une cloison ou une feuille qui est au moins partiellement translucide ou transparente.

FIG. 1

FIG. 2

FIG. 3

FIG. 4

FIG. 5

# FIG. 6

FIG. 8

FIG. 7

VIII

VIII

0 022 126